# EUROPÄISCHE PATENTSCHRIFT

(11) **EP 3 169 554 B1**
(45) Veröffentlichungstag und Bekanntmachung des Hinweises auf die Patenterteilung: **15.08.2018**
(21) Anmeldenummer: 15739188.9
(22) Anmeldetag: 29.06.2015
(51) Int. Cl.: B60R 21/2342

(54) **GASSACK FÜR EIN FAHRZEUGINSASSEN-RÜCKHALTESYSTEM**
AIRBAG FOR A VEHICLE OCCUPANT RESTRAINT SYSTEM
COUSSIN GONFLABLE POUR UN SYSTÈME DE RETENUE DE L'OCCUPANT DE VÉHICULE

(30) Priorität: 16.07.2014 DE 102014213886
(43) Veröffentlichungstag der Anmeldung: 24.05.2017
(73) Patentinhaber: Takata AG, 63743 Aschaffenburg (DE)
(72) Erfinder: WENDT, Mario, 14532 Stahnsdorf (DE); PFEIFFER, Johannes, 13357 Berlin (DE)
(74) Vertreter: Maikowski & Ninnemann Patentanwälte Partnerschaft mbB
(86) Internationale Anmeldenummer: PCT/EP2015/064717
(87) Internationale Veröffentlichungsnummer: WO 2016/008708

(56) Entgegenhaltungen:
- EP-A1- 0 495 409
- EP-A2- 0 922 616
- DE-A1-102011 085 934
- JP-A- 2007 001 362
- US-A- 3 768 830
- US-A1- 2012 025 497

## Beschreibung

Die Erfindung betrifft einen Gassack für ein Fahrzeuginsassen-Rückhaltesystem gemäß Anspruch 1 sowie einen Gassack gemäß Anspruch 15.

Aus dem Stand der Technik sind Gassäcke zum Schutz von Fahrzeuginsassen bekannt, die mit Abströmöffnungen ausgestattet sind, über die Gas aus dem Gassackinneren abgeströmt und somit der nach dem Befüllen des Gassacks vorliegende Innendruck im Gassack definiert abgebaut werden kann. Ein derartiges Abströmen von Gas soll insbesondere für einen möglichst sanften Energieabbau beim Auftreffen des zu schützenden Fahrzeuginsassen auf den Gassack sorgen.

Bekannt ist weiterhin, mehrere Kammern (Teilkammern) vorzusehen, die zeitversetzt freigegeben werden und in welche die in einer Hauptkammer befindlichen Gase zeitversetzt einströmen. Bei einer derartigen Ausführung des Gassacks erfolgt der Abbau des Innendruckes primär durch Volumenerweiterung und nicht durch einen Gasaustritt aus dem Gassackinneren in die Umgebung. Beispielsweise offenbart die EP 0 686 527 B1 einen derartigen Gassack. Insbesondere ist hier eine das aufblasbare Volumen des Gassacks umschließende Gassackhülle mit Reißnähten versehen, die das aufblasbare Volumen begrenzende Gassacklagen miteinander verbinden, wodurch der Gassack in eine Hauptkammer und mehrere Nebenkammern unterteilt wird. Nachteilig an dieser Konstruktion kann sein, dass die Nebenkammern und damit die Reißnähte relativ lang sein müssen, um eine spürbare Volumenerweiterung erzielen zu können. Dies kann bei der Fertigung des Gassackmoduls problematisch sein, da die Unversehrtheit der Reißnähte bis zur Verpackung des gefalteten Gassackes in einem Modulgehäuse garantiert werden muss. Des Weiteren muss die Funktion der Reißnähte bei einem Auslösen des Gassacks sicherstellt werden, da ein Aufreißen der Reißnähte über eine große Länge notwendig ist. Auch weist die Hauptkammer aufgrund der zusätzlichen Nebenkammern ein relativ geringes Volumen und somit eine z.B. im Vergleich zu Einkammergassäcken geringere Rückhaltewirkung auf.

Die EP 0 922 616 A2 beschreibt einen Gassack nach dem Oberbegriff von Anspruch 1 und 15, mit einer ersten und einer zweiten Kammer, die durch eine Trennlage voneinander getrennt sind, wobei in der Trennlage eine Überströmöffnung ausgebildet ist, über die Gas aus der ersten in die zweite Kammer übertreten kann. Mittels eines Verschlussmittels wird bei Beginn eines Befüllens der ersten Kammer die Überströmöffnung verschlossen und bei einem weiteren Befüllen der ersten Kammer wird die Überströmöffnung freigegeben.

Weiterhin sind aus den Dokumenten JP 2007 001362 A, US 2012/025497 A1, US 3 768 830 A und DE 10 2011 085 934 A1 Gassäcke bekannt, bei denen eine erste und eine zweite Kammer durch eine Trennlage getrennt sind, wobei in der Trennlage eine Überströmöffnung ausgebildet ist, über die Gas von der ersten in die zweite Kammer übertreten kann.

Das der Erfindung zugrunde liegende Problem besteht darin, einen möglichst zuverlässigen Gassack mit möglichst guter Schutzwirkung zu schaffen.

Dieses Problem wird durch den Gassack mit den Merkmalen des Anspruchs 1 sowie durch den Gassack mit den Merkmalen des Anspruchs 15 gelöst. Weiterbildungen der Erfindung sind in den abhängigen Ansprüchen angegeben.

Danach wird ein Gassack für ein Fahrzeuginsassen-Rückhaltesystem bereitgestellt, mit
- mindestens einer ersten und einer zweiten Kammer;
- einer Trennlage, die die erste von der zweiten Kammer trennt;
- mindestens einer in der Trennlage ausgebildeten Überströmöffnung, über die Gas aus der ersten in die zweite Kammer übertreten kann; und
- einem Verschlussmittel, das so ausgebildet ist, dass es die Überströmöffnung bei Beginn eines Befüllens der ersten Kammer verschließt, die Überströmöffnung jedoch zumindest teilweise freigibt, wenn der Innendruck in der ersten Kammer einen vorgebbaren Grenzwert überschreitet.

Das Verschlussmittel sorgt demnach dafür, dass ein Überströmen von Gas nach einem Aktivieren des Gassacks (d.h. eines zum Aufblasen des Gassacks dienenden Gasgenerators) aus der ersten in die zweite Kammer zunächst unterbleibt. Erst nach Erreichen eines Mindestinnendrucks der ersten Kammer gibt das Verschlussmittel die Überströmöffnung frei, um ein Überströmen von Gas aus der ersten Kammer heraus in die zweite Kammer zu ermöglichen und auf diese Weise einen durch einen Aufprall des Fahrzeuginsassen auf die erste Kammer hervorgerufenen Druckanstieg in der ersten Kammer zu begrenzen, wie weiter unten noch erläutert werden wird. Die Steuerung der Überströmöffnung erfolgt insbesondere rein passiv, d.h. durch Einwirken des Innendrucks in der ersten Kammer auf das Verschlussmittel. Denkbar ist natürlich auch, dass die Überströmöffnung nicht freigegeben wird, da der Innendruck in der ersten Kammer den Grenzwert nicht erreicht.

Dabei ist die Überströmöffnung in mindestens einer von dem Verschlussmittel zunächst fixierten Falte der Trennlage ausgebildet. Der Innendruck in der ersten Kammer steigt insbesondere bei einem Aufprall des zu schützenden Fahrzeuginsassen auf den Gassack, insbesondere auf die erste Kammer, an. Der steigende Innendruck führt insbesondere zu einer erhöhten Spannung in der Trennlage oder zu einer erhöhten auf die Trennlage wirkenden Spannung, wobei z.B. die erhöhte Spannung dazu führt, dass die Verschlussmittel die Fixierung der Falte lösen und damit die Überströmöffnung zumindest teilweise freigeben. Die Falte ist insbesondere so ausgebildet und fixiert, dass sie im flach ausgebreiteten (nicht aufgeblasenen) Zustand vorhanden ist (d.h. vor dem Zusammenfalten des Gassacks). Es wird darauf hingewiesen, dass das Verschlussmittel zur Fixierung der Falte dient. Denkbar ist auch ein anderer Freigabemechanismus, z.B. ist das Verschlussmittel klappenartig oder als Abdeckelement ausgebildet, das sich bei Erreichen des Grenzwertes des Innendrucks relativ zu der Überströmöffnung bewegt und diese zumindest abschnittsweise freigibt.

Bei freigegebener Überströmöffnung wird Gas aus der ersten in die zweite Kammer des Gassacks überströmen, wodurch der Innendruck in der ersten Kammer und damit die Belastung auf den Fahrzeuginsassen reduziert wird. Insbesondere wird durch den Gasübertritt von der ersten in die zweite Kammer ein Anstieg der Belastung auf den Fahrzeuginsassen über ein kritisches Maß hinaus verhindert. Denkbar ist, dass der Gassack über die erste Kammer befüllt wird, d.h. ein Gasgenerator ist so angeordnet, dass das von ihm im Auslösefall erzeugte Gas zunächst in die erste Kammer und erst nach Freigeben der Überströmöffnung auch in die zweite Kammer einströmt. Beispielsweise handelt es sich bei dem erfindungsgemäßen Gassack um einen Fahrer- oder Beifahrergassack, wobei sich die erste Kammer - bezogen auf den im Fahrzeug angeordneten Zustand des Gassacks - zumindest teilweise dem zu schützenden Fahrzeuginsassen zugewandt erstreckt. Die zweite Kammer erstreckt sich z.B. zumindest teilweise - entlang der Fahrzeughöhenrichtung betrachtet - oberhalb der ersten Kammer.

Im Unterschied zu einem Gassack mit nur einer Kammer, die eine Abströmöffnung aufweist, über die Gas aus dem Gassack in die Umgebung abströmen kann, geht das aus der ersten Kammer abströmende Gas des erfindungsgemäßen Gassacks nicht verloren, sondern verbleibt nach dem Übertritt in die zweite Kammer im befüllbaren Volumen des Gassacks und kann somit weiterhin zur Schutzwirkung des Gassacks beitragen.

Gemäß der Erfindung umfasst die Falte der Trennlage einen ersten und einen zweiten Abschnitt der Trennlage, wobei der erste und der zweite Abschnitt entlang einer Faltlinie aufeinander gefaltet sind, und wobei die Überströmöffnung in dem ersten und/oder dem zweiten Abschnitt ausgebildet ist. Es ist denkbar, dass die Überströmöffnung sich nur in dem ersten oder nur in dem zweiten Abschnitt erstreckt. Möglich ist allerdings auch, dass sich die Überströmöffnung sowohl in dem ersten als auch in dem zweiten Abschnitt erstreckt, d.h. die Faltlinie gewissermaßen die Überströmöffnung durchläuft. Es können auch mehrere Überströmöffnungen vorgesehen sein, wobei sich zumindest eine Überströmöffnung in dem ersten Abschnitt und zumindest eine weitere Überströmöffnung in dem zweiten Abschnitt des gefalteten Bereichs der Trennlage befindet.

Es wird darauf hingewiesen, dass die Trennlage, in der die Überströmöffnung ausgebildet ist, nicht notwendigerweise aus einem Stück bestehen muss. Denkbar ist zum Beispiel, dass mehrere miteinander verbundene Materiallagen die Trennlage ausbilden.

Gemäß einer anderen Weiterbildung der Erfindung verbindet das Verschlussmittel den ersten mit dem zweiten Abschnitt der Falte der Trennlage oder es verbindet den ersten Abschnitt der Falte mit einem anderen Bereich des Gassacks jeweils derart, dass die Überströmöffnung zunächst verschlossen ist. Beispielsweise umfasst das Verschlussmittel eine zerstörbare Verbindung oder das Verschlussmittel ist in Form einer zerstörbaren Verbindung ausgebildet, wobei die zerstörbare Verbindung bei Erreichen des Grenzwertes des Innendrucks in der ersten Kammer zumindest teilweise zerstört wird und die Überströmöffnung freigibt. Möglich ist allerdings auch, dass die Zerstörung der zerstörbaren Verbindung aktiv erfolgt, d.h. auf ein Steuersignal einer Steuereinrichtung hin (s.u.).

Bei der zerstörbaren Verbindung kann es sich um eine Reißnaht (etwa in Form einer Nähnaht oder um einer Klebnaht) handeln. Denkbar ist insbesondere, dass die Reißnaht zumindest einen Abschnitt aufweist, der bogenartig zumindest einen Abschnitt eines Randes der Überströmöffnung umläuft. Beispielsweise weist die Reißnaht zumindest einen Abschnitt auf, der zumindest näherungsweise parallel zu dem Rand der Überströmöffnung verläuft.

Gemäß einer anderen Ausgestaltung der Erfindung weist der Gassack eine erste und eine zweite Gassacklage auf, die die erste Kammer des Gassacks begrenzen. Beispielsweise sind die beiden Gassacklagen aus zumindest näherungsweise deckungsgleichen Zuschnitten aus einem (insbesondere gewebten) Gassackmaterial ausgebildet. Die beiden Gassacklagen sind insbesondere zudem zumindest abschnittsweise entlang ihres Umfanges über eine Naht miteinander verbunden. Denkbar ist auch, dass die erste und die zweite Gassacklage einstückig miteinander verbunden sind, d.h. aus einem einzigen Zuschnitt hergestellt sind, wobei Abschnitte dieses Zuschnitts die erste und die zweite Gassacklage ausbilden. Die Abschnitte sind insbesondere aufeinander gefaltet, wobei benachbarte Randbereiche der Abschnitte zum Beispiel über eine Naht miteinander verbunden sind.

Bei der Trennlage kann es sich um mindestens eine von der ersten und der zweiten Gassacklage verschiedene Materiallage handeln. Dabei kann die Trennlage natürlich aus demselben Material wie die erste und die zweite Gassacklage ausgebildet sein.

Gemäß einer weiteren Variante der Erfindung erstreckt sich die Trennlage zumindest teilweise zwischen der ersten und der zweiten Gassacklage, d.h. die Trennlage teilt ein durch die erste und die zweite Gassacklage umschlossenes Volumen in die erste und die zweite Kammer auf. Beispielsweise ist ein erster Teilabschnitt der Trennlage mit der ersten Gassacklage und ein zweiter Teilabschnitt der Trennlage mit der zweiten Gassacklage verbunden.

Gemäß einer anderen Ausgestaltung der Erfindung ist die Trennlage durch einen Abschnitt der zweiten Gassacklage ausgebildet. Insbesondere weist dieser Abschnitt der zweiten Gassacklage die oben bereits beschriebene Falte mit der Überströmöffnung auf.

Denkbar ist in Bezug auf diese Variante des Weiteren, dass der Gassack eine Zusatzlage aufweist, die zusammen mit der zweiten Gassacklage die zweite Kammer begrenzt. Die Zusatzlage erstreckt sich insbesondere außerhalb des von der ersten und der zweiten Gassacklage umschlossenen Volumens des Gassacks. Möglich ist insbesondere, dass die Zusatzlage mit der zweiten Gassacklage (zum Beispiel über eine Naht) verbunden ist.

Möglich ist darüber hinaus, dass die Zusatzlage eine Öffnung aufweist, die mit der in der Trennlage ausgebildeten Überströmöffnung fluchtet und z.B. auch zumindest näherungsweise dieselben Abmessungen wie die Überströmöffnung besitzt. Denkbar ist insbesondere, dass die Zusatzlage so mit dem Teilabschnitt der zweiten Gassacklage, der die Trennlage ausbildet, verbunden ist, dass die Zusatzlage zumindest näherungsweise parallel zu diesem Teilabschnitt der zweiten Gassacklage (d.h. zur Trennlage) verläuft (bezogen auf den unaufgeblasenen und/oder im aufgeblasenen Zustand des Gassacks). Beispielsweise ist die Öffnung in mindestens einer Falte der Zusatzlage ausgebildet, die parallel zu der Falte der Trennlage verläuft (vor dem Aufblasen des Gassacks). Denkbar ist insbesondere auch, dass die Falte gemeinsam mit der Falte der Trennlage durch die Verschlussmittel zunächst fixiert ist.

In einem zweiten Aspekt betrifft die Erfindung Gassack für ein Fahrzeuginsassen-Rückhaltesystem, insbesondere wie oben beschrieben, mit
- mindestens einer ersten und einer zweiten Kammer;
- mindestens einer Trennlage, die die erste Kammer von der zweiten Kammer trennt;
- mindestens einer in der Trennlage ausgebildeten Überströmöffnung, über die Gas aus der ersten Kammer in die zweite Kammer übertreten kann; und
- einem Verschlussmittel, das so ausgebildet ist, dass es die Überströmöffnung zunächst verschließt, die Überströmöffnung jedoch zumindest teilweise freigibt, wenn der Innendruck in der ersten Kammer einen vorgebbaren Grenzwert überschreitet und/oder wenn es ein entsprechendes Steuersignal einer Steuereinrichtung erreicht,
- wobei die Überströmöffnung in mindestens einer von dem Verschlussmittel zunächst fixierten Falte der Trennlage ausgebildet ist,
- wobei die Falte der Trennlage einen ersten und einen zweiten Abschnitt der Trennlage umfasst, wobei der erste und der zweite Abschnitt entlang einer Faltlinie aufeinander zu gefaltet sind, und wobei die Überströmöffnung in dem ersten und/oder dem zweiten Abschnitt ausgebildet ist.

Die Steuerung der Überströmöffnung erfolgt gemäß dem zweiten Erfindungsaspekt also z.B. rein passiv, d.h. die Fixierung der Falte mit der Überströmöffnung wird unter Einwirkung des Innendrucks in der ersten Kammer gelöst. Alternativ oder zusätzlich kann die Steuerung der Überströmöffnung (d.h. das Lösen der Fixierung der Falte) auch aktiv erfolgen, d.h. auf ein Steuersignal einer Steuereinrichtung hin. Beispielsweise wird das Steuersignal in Abhängigkeit von dem Körpergewicht des Fahrzeuginsassen und/oder einem Unfallverlauf erzeugt. Vorrichtungen, die zu einem aktiven Lösen der Falte mit der Überströmöffnung verwendet werden könnten, sind in der internationalen Patentanmeldung PCT/EP 2013/076400 (veröffentlicht als WO 2014/090951) beschrieben, auf die insofern ausdrücklich Bezug genommen wird.

Die Erfindung betrifft darüber hinaus insbesondere ein Frontgassackmodul, d.h. zum Beispiel ein Fahrergassackmodul oder ein Beifahrergassackmodul, mit einem Gassack, der wie oben beschrieben ausgebildet ist, sowie ein Fahrzeug mit einem derartigen Frontgassackmodul.

Die Erfindung wird im Folgenden anhand von Ausführungsbeispielen unter Bezugnahme auf die Figuren näher erläutert. Es zeigen:
- Figur 1: eine Seitenansicht eines Fahrergassacks gemäß einem ersten Ausführungsbeispiel der Erfindung;
- Figur 2: den Gassack aus Figur 1 nach Auftreffen des zu schützenden Fahrzeuginsassen;
- Figur 3: eine Ansicht des Gassacks aus den Figuren 1 und 2 im flach ausgebreiteten Zustand;
- Figur 4: einen Schnitt entlang der Linie IV - IV in Figur 3;
- Figur 5: einen Beifahrergassack gemäß einem zweiten Ausführungsbeispiel der Erfindung;
- Figur 6: den Gassack aus Figur 5 nach Auftreffen des zu schützenden Fahrzeuginsassen;
- Figur 7: einen Teilbereich des Gassacks aus den Figuren 5 und 6 im flach ausgebreiteten Zustand; und
- Figur 8: einen Schnitt entlang der Linie VIII - VIII in Figur 7.

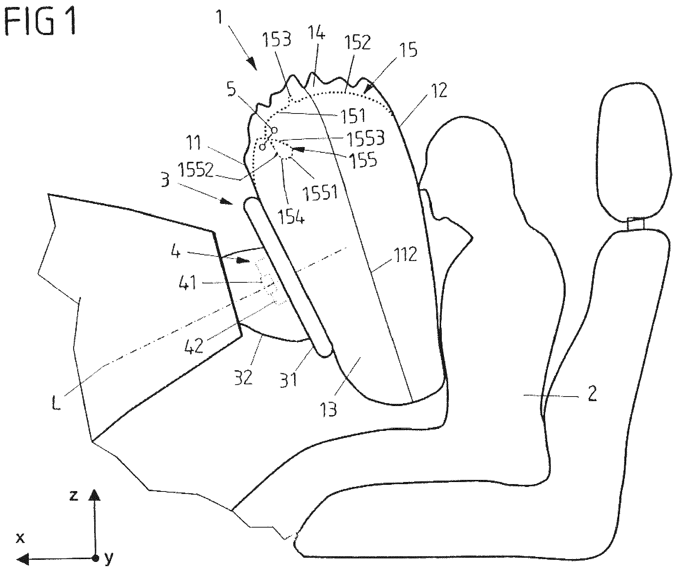

Die Figuren 1 bis 4 zeigen eine erste Ausführungsform des erfindungsgemäßen Gassackes 1 für eine in einem Lenkrad 3 untergebrachte Gassackanordnung zum Schutz eines davor positionierten Fahrzeugführers 2. Der Gassack 1 ist Bestandteil eines in dem Lenkrad 3 (insbesondere in einem von einem Lenkradkranz 31 umlaufenen Lenkradkörper 32) angeordneten Fahrerairbagmoduls 4, welches neben dem Gassack 1 einen Gasgenerator 41 und ein Modulgehäuse oder Generatorträger 42 umfasst. Beispielsweise erstreckt sich die Lenkachse L durch das Modul 4 hindurch.

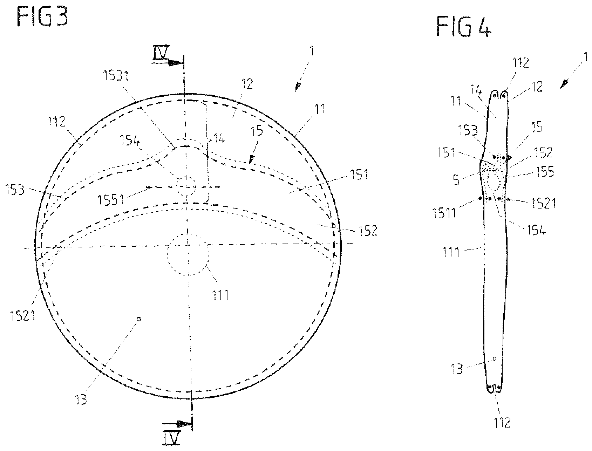

Zur Bildung einer äußeren Gassackhülle besteht der Gassack 1 aus zwei deckungsgleichen, zumindest annähernd kreisrunden Zuschnitten, die eine erste bzw. eine zweite Gassacklage 11, 12 ausbilden, die entlang ihrer jeweiligen Randbereiche in geeigneter Weise (insbesondere durch eine Umfangsnaht 112; vgl. auch Fig. 3 und 4) miteinander verbunden sind. In der ersten Gassacklage 11, die dem Lenkrad 3 zugewandt ist, befindet sich eine Einströmöffnung 111 (Fig. 3 und 4), durch welche nach Zündung des Gasgenerators 41 durch diesen freigesetzte Gase in den Gassack 1 eingeleitet werden. Üblicherweise ragt der Gasgenerator 41 durch die Einströmöffnung zumindest teilweise in den Gassack 1 hinein.

Über im Inneren des Gassacks 1 angeordnete Befestigungsmittel (z.B. umfassend einen Diffusor oder einen Haltering) ist der Gassack 1 durch Klemmung eines Randbereiches der Einströmöffnung 111 an dem Modulgehäuse/Generatorträger 42 fixiert, wobei das Modulgehäuse bzw. der Generatorträger 42 wiederum im Lenkrad 3 befestigt sind.

Der Gassack 1 weist darüber hinaus eine erste Kammer (Hauptkammer 13) und zweite Kammer (Nebenkammer 14) auf, wobei die Haupt- und die Nebenkammer 13, 14 im nicht aktivierten Zustand des Gassacks 1 durch eine Trennlage 15 im Wesentlichen gasdicht voneinander getrennt sind. Im Ausführungsbeispiel der Fig. 1 bis 4 ist die Trennlage 15 innerhalb der durch die erste und die zweite Gassacklage 11, 12 gebildeten äußeren Gassackhülle des Gassacks 1 angeordnet.

Die Trennlage 15 ist mehrteilig (vorliegend zweiteilig) ausgeführt, wobei ein erstes Teilelement 151 der Trennlage 15 mit der ersten Gassacklage 11 ("Unterplatte") und ein zweites Teilelement 152 mit der zweiten Gassacklage 12 ("Oberplatte") entlang jeweils eines Randbereiches verbunden sind (über Nähte 1511, 1521; vgl. Fig. 3 und 4). Die Verbindung des ersten Teilelements 151 mit dem zweiten Teilelement 152 erfolgt über eine Naht 153.

In der Trennlage 15 ist eine Überströmöffnung 154 ausgebildet (vorliegend im ihrem ersten Teilelement 151). Denkbar ist natürlich auch, dass die Überströmöffnung 154 oder eine zusätzliche Überströmöffnung in dem zweiten Teilelement 152 vorgesehen ist oder sich die Überströmöffnung 154 in beiden Teilelementen 151, 152 erstreckt. Darüber hinaus weist die Trennlage 15 (ihr erstes Teilelement 151) einen gefalteten Bereich (Falte 155) auf, in dem sich die Überströmöffnung 154 befindet. Die Falte 155 weist zwei entlang einer Faltlinie 1551 aufeinander zu gefaltete Abschnitte 1552, 1553 auf, wobei die Überströmöffnung 154 in einem der beiden Abschnitte 1552, 1553 oder auch die Faltlinie 1551 überlappend in beiden Abschnitten 1552, 1553 ausgebildet sein kann.

Die beiden Abschnitte 1552, 1553 der Falte 155 sind über eine Reißnaht 5 aneinander fixiert, und zwar dergestalt, dass die Reißnaht 5 die Überströmöffnung 154 zunächst verschließt. Beispielsweise umläuft die Reißnaht 5 die Überströmöffnung 154 zumindest abschnittsweise. Die Reißnaht 5 ist so beschaffen, dass sie aufreißt und somit die Überströmöffnung 154 freigibt, wenn der Innendruck in der Hauptkammer 13 einen vorgebbaren Mindestwert übersteigt, wie weiter unten erläutert werden wird. Die Reißnaht 5 realisiert also eine zerstörbare Verbindung eines Verschlussmittels, das die Überströmöffnung 154 zunächst verschließt, diese jedoch abhängig vom Innendruck in der Hauptkammer 13 freigibt.

Fig. 1 zeigt den erfindungsgemäßen Gassack 1 in einem teilbefüllten (teilentfalteten) Zustand, d.h. nach einer nach einem Unfall erfolgten Zündung des Gasgenerators 41. Der Fahrzeuginsasse 2 hat sich durch die unfallbedingte Verzögerung des Fahrzeugs in Fahrtrichtung (x-Richtung) nach vorne verlagert, ist jedoch noch nicht in den Gassack 1 eingedrungen. Der im Gassack 1 herrschende Innendruck geht allein auf das vom Gasgenerator 41 einströmende Gas und damit auf die Leistungscharakteristik des Gasgenerators 41 (erzeugte Gasmenge, Druck, Temperatur) zurück.

Im in Fig. 1 dargestellten Entfaltungszustand ist bisher lediglich die Hauptkammer 13 des Gassackes 1 über die vom Gasgenerator 41 freigesetzten und durch die Einströmöffnung 11 des Gassacks 1 einströmenden Gase befüllt. Der in der Hauptkammer 13 herrschende Innendruck (und die dadurch bedingte Spannung in der Trennlage 15) reicht jedoch nicht aus, um die die Überströmöffnung 154 verschließende Reißnaht 5 in der Trennlage 15 zu zerstören, so dass ein Gasdurchtritt von der Hauptkammer 13 zur Nebenkammer 14 über die Überströmöffnung 154 noch nicht möglich ist. Zu erkennen ist auch, dass im Wesentlichen nur die Hauptkammer 13 im potentiellen Auftreffbereich des sich vorverlagernden Insassen 2 liegt, bei Beginn des Eindringens des Insassen 2 in den Gassack 1 also nur die Hauptkammer 13 für die Rückhaltung des Fahrzeuginsassen 2 sorgen kann.

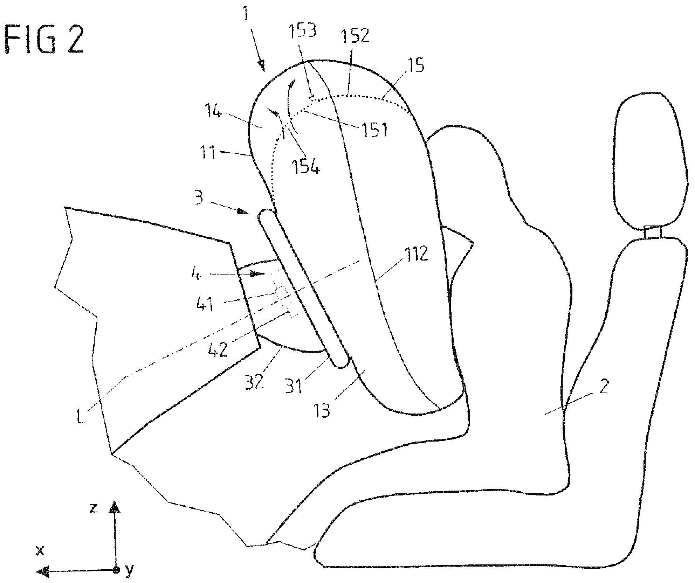

Figur 2 stellt den Gassack 1 im voll entfalteten Zustand dar. Der Fahrzeuginsasse 2 hat sich weiter in Fahrtrichtung vorverlagert und ist teilweise in den Gassack 1 eingedrungen. Das Eindringen ist im Wesentlichen in die Hauptkammer 13 erfolgt, die sich oberhalb der Hauptkammer 13 erstreckende Nebenkammer 14 wurde nicht beaufschlagt. Infolge des Auftreffens des Fahrzeuginsassen 2 auf den Gassack (insbesondere auf die Hauptkammer 13) hat sich der in der Hauptkammer 13 herrschende Innendruck und die dadurch verursachte Spannung in der Trennlage 15 soweit erhöht, dass ein vorgegebener Grenzwert überschritten wurde. Bei Überschreiten dieses Grenzwertes des Innendrucks reißt die Reißnaht 5 auf und ist entsprechend nicht mehr in der Lage, die Falte 155 der Trennlage 15 zu fixieren. Infolgedessen wurde die Überströmöffnung 154 freigegeben, worauf ein Gasübertritt von der Hauptkammer 13 in die Nebenkammer 14 und ein Befüllen auch der Nebenkammer 14 erfolgte.

Ein im Gassack 1 (insbesondere in der Hauptkammer 13) ansteigender Innendruck ist gleichbedeutend mit einer stärkeren Verzögerung (Rückhaltung) des Fahrzeuginsassen 2 beim Auftreffen auf den Gassack 1, was zu einer höheren Belastung des Fahrzeuginsassen 2 führt.

Durch den Gasdurchtritt von der Hauptkammer 13 in die Nebenkammer 14 wird der Innendruck in der Hauptkammer 13 wieder reduziert und ein Anstieg der Belastung auf den Fahrzeuginsassen 2 auf ein für ihn kritisches Maß verhindert.

Wie oben bereits erwähnt, besitzt der erfindungsgemäße Gassack im Vergleich mit einem Einkammergassack, der eine Abströmöffnung zum Abströmen von Gas in die Umgebung aufweist, den Vorteil, dass die aus der Hauptkammer 14 in die Nebenkammer 13 austretenden Gase nicht für die Rückhaltung des Insassen verloren sind, da sie im gesamten befüllbaren Volumen des Gassackes 1 verbleiben und so zur Aufrechterhaltung eines definierten Druckniveaus im Gassack 1 beitragen.

Unabhängig davon können sowohl die Hauptkammer 13 als auch die Nebenkammer 14 des Gassackes 1 mit Abströmöffnungen (nicht dargestellt) versehen sein, also mit Öffnungen, die einen Gasaustritt aus der Haupt- und/oder Nebenkammer 13, 14 direkt in die Umgebung des Gassacks 1 ermöglichen. Die Abströmöffnungen können dann allerdings einen (z.B. wesentlich) geringen Austrittsquerschnitt aufweisen als die Abströmöffnungen eines gewöhnlichen Einkammergassacks. Das Vorsehen von Abströmöffnungen bietet eine zusätzliche Möglichkeit zur Abstimmung des Gesamtsystems, insbesondere im Hinblick auf die Leistungscharakteristik des Gasgenerators und die gewünschte Rückhaltung des Insassen.

Figur 3 zeigt den Gassack 1 der Figuren 1 und 2 im flach ausgebreiteten Zustand, allerdings ohne den im Bereich der Überströmöffnung 154 gefalteten Bereich (d.h. die Falte 155) des ersten Teilelementes 151 der Trennlage 15 und dementsprechend auch ohne die Reißnaht 5. Es ist lediglich die Faltlinie 1551 der Falte 155 angedeutet. Die Darstellung der Fig. 3 zeigt im Wesentlichen den vollentfalteten Gassack aus der Sicht des Fahrers, wenn er das Lenkrad in einer Geradeausfahrtstellung hält. Die Überströmöffnung 154 befindet sich in Figur 3 entsprechend in der 12-Uhr-Position.

Die Verbindungsnaht 153, die die Teilelemente 151, 152 der Trennlage 15 miteinander verbindet, weist im Bereich der Überströmöffnung 154 eine bogenartige Ausbuchtung 1531 auf, die die Überströmöffnung 154 umläuft. Dieser Verlauf der Naht 153 kann insbesondere während der anfänglichen Befüllung der Hauptkammer 13 vorteilhaft sein, weil partiell im Bereich der Überströmöffnung 154 auftretende Spannungsspitzen in der Trennlage 15 kompensiert werden, die zu einem vorzeitigen Aufreißen der Reißnaht 5 und damit zu einem vorzeitigen Gasübertritt aus der Hauptkammer 13 in die Nebenkammer 14 führen könnten.

Zu erkennen ist in Figur 3 darüber hinaus, dass sich die Nebenkammer 14 sichelförmig im oberen Bereich des Gassackes 1 erstreckt, vorliegend symmetrisch zur 12-Uhr-Position der Überströmöffnung 154.

Figur 4 zeigt einen Schnitt durch den Gassack 1 der Figur 3 entlang der Ebene IV-IV. Abweichend zur Figur 3 ist in Figur 4 das erste Teilelement 151 der Trennlage 15 einschließlich der Falte 155, der Reißnaht 5 sowie der in der Falte angeordneten Überströmöffnung 154 dargestellt.

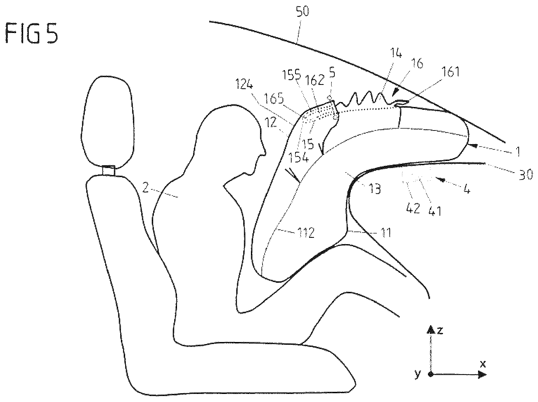

Die Figuren 5 bis 8 beziehen sich auf ein zweites Ausführungsbeispiel des erfindungsgemäßen Gassackes 1 für eine in einer Instrumententafel 30 untergebrachte Gassackanordnung zum Schutz eines davor positionierten Fahrzeuginsassen 2 (d.h. eines Beifahrers). Der Gassack 1 ist entsprechend Bestandteil eines unter einer Abdeckung angeordneten Beifahrerairbagmoduls 4, welches analog zum Fahrermodul der Figur 1 einen Gasgenerator 41 und ein Modulgehäuse/Generatorträger 42 umfasst.

Zur Bildung einer Hauptkammer 13 weist der Gassack 1 hier ebenfalls zwei Gassacklagen 11, 12 auf, die entlang ihrer Randbereiche miteinander verbunden sind; insbesondere über eine Umfangsnaht 112. Im Unterschied zum ersten Ausführungsbeispiel sind die beiden Gassacklagen 11, 12 jedoch nicht deckungsgleich. Vielmehr ist die im aufgeblasenen Zustand des Gassacks 1 im Wesentlichen dem Fahrzeuginsassen zugewandte zweite Gassacklage 12 ("Oberplatte") größer als die erste Gassacklage 11 ("Unterplatte").

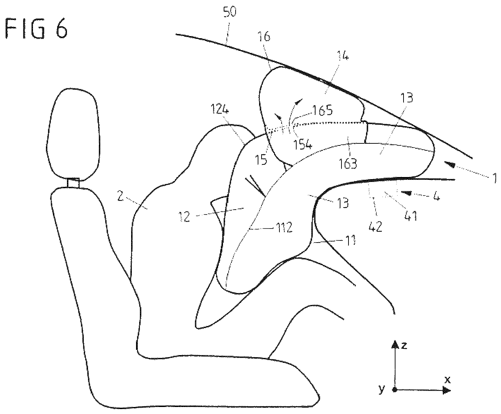

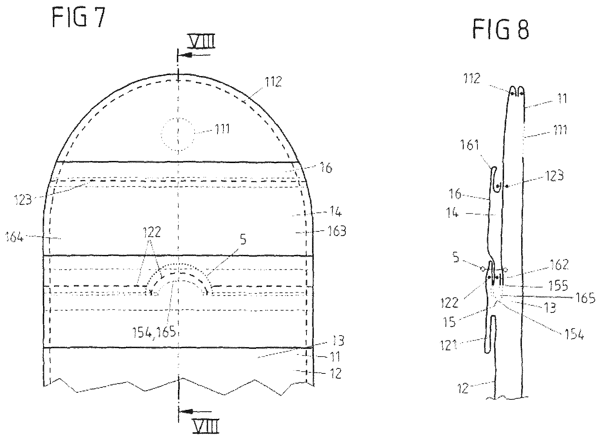

Vor der Verbindung der beiden Gassacklagen 11, 12 miteinander mittels der Umfangsnaht 112 wird die größere zweite Gassacklage 12 derart gefaltet (Falten 121, vgl. Fig. 8), dass sie zumindest näherungsweise die Ausdehnung der ersten Gassacklage 11 aufweist. Die Falten 121 in der zweiten Gassacklage 12 werden in ihren beiden, am Ende liegenden Randbereichen insbesondere durch die Umfangsnaht 112 fixiert. Da zwischen den Randbereichen keine Fixierung der Falten 121 erfolgt, bildet der in Falten gelegte Bereich der zweiten Gassacklagen 12 im aufgeblasenen Zustand des Gassackes 1 eine in Richtung des Fahrzeuginsassen 2 weisende Ausbuchtung 124 (vgl. Fig. 6) aus, die die Tiefe (die Wirkdicke) des Gassackes 1 in diesem Bereich erhöht.

In der ersten Gassacklage 11 (d.h. in der der Instrumententafel 30 zugewandten Seite des Gassackes 1) befindet sich eine Einströmöffnung 111 (vgl. Fig. 7 und 8), durch welche nach Zündung des Gasgenerators 41 durch diesen freigesetzte Gase in den Gassack 1 eingeleitet werden. Über in seinem Inneren angeordnete Befestigungsmittel (z.B. Diffusor oder Haltering) ist der Gassack 1 analog zum ersten Ausführungsbeispiel durch Klemmung des Randbereiches der Einströmöffnung 111 an dem Modulgehäuse/Generatorträger 42 fixiert.

Der Gassack 1 gemäß dem zweiten Ausführungsbeispiel weist neben der Hauptkammer 13 ebenfalls eine Nebenkammer 14 auf, wobei Haupt- und Nebenkammer 13, 14 im nicht aktivierten Zustand des Gassacks im Wesentlichen gasdicht voneinander getrennt sind. Im Unterschied zum ersten Ausführungsbeispiel befindet sich die Nebenkammer 14 allerdings außerhalb des von der ersten und der zweiten Gassacklage 11, 12 begrenzten Volumens (der Hauptkammer 13). Die Nebenkammer 14 wird insbesondere durch eine Zusatzlage 16 begrenzt, die im nicht aufgeblasenen Zustand des Gassacks 1 zumindest teilweise gefaltet ist (Falte 161). Die Falte(n) 161 verlaufen hinsichtlich ihrer Längserstreckung parallel zu den Falten 121 in der zweiten Gassacklage 12. Zudem sind seitliche Randbereiche 163, 164 der Zusatzlage 16, insbesondere unter Fixierung der Falten 161, mittels der Umfangsnaht 112 mit der ersten und der zweiten Gassacklage 11, 12 verbunden. Darüber hinaus erfolgt eine Fixierung der Zusatzlage 16 an der zweiten Gassacklage 12 über zusätzliche Nähte 122, 123 (vgl. Figuren 7 und 8), die z.B. zumindest abschnittweise zumindest näherungsweise quer zur Umfangsnaht 112 (im Wesentlich in Fahrzeugquerrichtung, y-Richtung) verlaufen.

Darüber hinaus ist die Nebenkammer 14 durch einen Teilabschnitt der zweiten Gassacklage 12 von der Hauptkammer 13 getrennt, d.h. die oben in Bezug auf das erste Ausführungsbeispiel erläuterte Trennlage 15 wird hier durch die zweite Gassacklage 12 ausgebildet. Die Trennlage 15 ist im zweiten Ausführungsbeispiel somit nicht als gesonderte Materiallage ausgeformt, sondern einstückig mit dem Rest der zweiten Gassacklage 12 verbunden. Der die Trennlage 15 ausbildende Teilabschnitt der zweiten Gassacklage 12 weist die Überströmöffnung 154 auf, wobei der Bereich der Trennlage 15 mit der Überströmöffnung 154 in Falten gelegt ist (d.h. mindestens eine Falte 155 aufweist). Analog zum ersten Ausführungsbeispiel ist die Falte 155 mit einer Reißnaht 5 fixiert, wodurch die Überströmöffnung 154 zunächst verschlossen ist. Übersteigt der Innendruck in der Hauptkammer jedoch einen vorgebbaren (insbesondere von der Ausgestaltung und Position der Reißnaht 5 abhängigen) Mindestwert, wird die Reißnaht 5 aufgetrennt und die Überströmöffnung 154 freigegeben, wie oben in Zusammenhang mit dem ersten Ausführungsbeispiel erläutert.

Die Zusatzlage 16 überlappt mit dem die Trennlage 15 ausbildenden Abschnitt der zweiten Gassacklage 12 und ist dort über die Naht 122 mit der zweiten Gassacklage 12 verbunden. Darüber hinaus weist die Zusatzlage 16 im Bereich einer an deren Rand liegenden Falte 162 eine Öffnung 165 auf, die mit der in der Trennlage 15 ausgebildeten Überströmöffnung 154 fluchtet. Denkbar ist insbesondere, dass die Überströmöffnung 154 und die Öffnung 165 deckungsgleich ausgebildet sind. Die Zusatzlage 16 ist des Weiteren so mit der zweiten Gassacklage 12 verbunden, dass sie parallel zu der Trennlage 15 verläuft. Entsprechend verschließt die Reißnaht 5 zunächst auch die Öffnung 165 der Zusatzlage 16. Die Reißnaht 5 geht also durch die im Bereich der Trennlage 15 vorhandene Falte 155 der zweiten Gassacklage 12 und die parallel dazu verlaufenden Falte 162 der Zusatzlage 16 hindurch und erstreckt sich bogenartig um einen Randabschnitt der Überströmöffnung 154 und einen Randabschnitt der Öffnung 165 herum. Die im Zusammenhang mit den Figuren 1 bis 4 Erläuterungen zur Funktionsweise des Gassacks gemäß dem ersten Ausführungsbeispiel gelten auch für das zweite Ausführungsbeispiel.

Es wird darauf hingewiesen, dass es auch denkbar ist, dass die Zusatzlage 16 die von der zweiten Gassacklage 12 ausgebildete Trennlage 15 nicht überlappt, sondern z.B. außerhalb der Reißnaht 5 (d.h. außerhalb des gefalteten Bereichs der Trennlage 15) mit der zweiten Gassacklage 12 verbunden ist. Die Trennung zwischen der Haupt- und der Nebenkammer 13, 14 würde dann allein durch die zweite Gassacklage 12 realisiert.

Analog zur Figur 1 zeigt Figur 5 den erfindungsgemäßen Gassack in einem mit Gas befüllten teilentfalteten Zustand. Auch beim Gassack 1 der Figur 5 liegt im Wesentlichen nur die Hauptkammer 13 im potentiellen Auftreffbereich des sich vorverlagernden Fahrzeuginsassen 2, so dass bei Beginn des Kontaktes des Fahrzeuginsassen 2 mit dem Gassack 1 im Wesentlichen die Hauptkammer 13 allein für die Rückhaltung des Fahrzeuginsassen 2 sorgt.

Figur 6 zeigt den Gassack 1 der Figur 5 im vollentfalteten Zustand, wobei durch Zerstörung der Reißnaht 5 jeweils die Faltung der Trennlage 15 und des mit der Trennlage überlappenden Bereichs der Zusatzlage 16 aufgelöst und entsprechend die Überströmöffnung 154 und die Öffnung 165 freigegeben wurden. Entsprechend wird Gas aus der Hauptkammer 13 in die Nebenkammer 14 überströmen, so dass ein Druckabbau in der Hauptkammer 13 erfolgt, wie oben bereits erläutert.

Darüber hinaus ist die Ausbuchtung 124 in der zweiten Gassacklage 12 (d.h. der Hauptkammer 13) voll ausgebildet und die Nebenkammer 14 voll befüllt. Die befüllte Nebenkammer 14 dient auch zum Abstützen des Gassackes 1 an einer Windschutzscheibe 50 des Fahrzeugs.

Die bereits angesprochene Figur 7 zeigt den Gassack 1 der Figuren 5 und 6 im flach ausgebreiteten Zustand.

Die Verbindungsnaht 122, über die die Zusatzlage 16 an der zweiten Gassacklage 12 befestigt ist, weist im Bereich der Überströmöffnung 154 (und der Öffnung 165 der Zusatzlage 16) eine Ausbuchtung auf, umläuft die Überströmöffnung 154 und die Öffnung 165 also in einem Bogen. Dies ermöglicht insbesondere eine weitere Kompensation von Spannungsspitzen in diesem Bereich des Gassacks 1.

Zudem kann der Figur 7 entnommen werden, dass sich die die Nebenkammer 14 in Fahrzeugquerrichtung (y-Richtung) im Wesentlichen geradlinig erstreckt. Denkbar ist natürlich auch ein anderer Verlauf der Nebenkammer 14, z.B. schräg und/oder gekrümmt.

Es wird darauf hingewiesen, dass der Gassack 1 (insbesondere die Nebenkammer 14) des ersten und des zweiten Ausführungsbeispiels zwar symmetrisch in Bezug auf eine durch die Fahrzeuglängs- und Fahrzeughöhenrichtung aufgespannte (und im Hinblick auf das erste Ausführungsbeispiel insbesondere bezogen auf den im Fahrzeug montierten und aufgeblasenen Zustand des Gassack und die 12-Uhr-Position des Lenkrades). Dies ist jedoch nicht zwingend. Beispielsweise kann die Nebenkammer 14 auf nur einer Seite des Gassacks (z.B. auf seiner einer Fahrzeuglängsseite zugewandten Seite) einen zusätzlichen seitlichen Abschnitt aufweisen, der etwa zur Abdeckung der Mittelkonsole und/oder der A-Säule des Fahrzeugs dient. Denkbar ist auch, dass die Nebenkammer 14 komplett seitlich angeordnet ist, d.h. seitlich von einer durch die Fahrzeuglängs- und Fahrzeughöhenrichtung aufgespannten (und im Hinblick auf das erste Ausführungsbeispiel insbesondere durch die Lenkwelle L hindurch verlaufenden) Ebene angeordnet ist. Insbesondere befindet sich eine derartige Nebenkammer auf einer äußeren Seite (d.h. einer der Fahrzeuglängsseite zugewandten Seite) dieser Ebene. Eine derartige Nebenkammer ist in der oben bereits erwähnten internationalen Patentanmeldung PCT/EP 2013/076400 beschrieben, auf die auch insofern ausdrücklich Bezug genommen wird.

## Patentansprüche

1. Gassack für ein Fahrzeuginsassen-Rückhaltesystem, mit
- mindestens einer ersten und einer zweiten Kammer (13, 14);
- mindestens einer Trennlage (15), die die erste Kammer (13) von der zweiten Kammer (14) trennt;
- mindestens einer in der Trennlage (15) ausgebildeten Überströmöffnung (154), über die Gas aus der ersten Kammer (13) in die zweite Kammer (14) übertreten kann;
- einem Verschlussmittel, das so ausgebildet ist, dass es die Überströmöffnung (154) bei Beginn eines Befüllens der ersten Kammer (13) verschließt, die Überströmöffnung (154) jedoch zumindest teilweise freigibt, wenn der Innendruck in der ersten Kammer (13) einen vorgebbaren Grenzwert überschreitet,
- **dadurch gekennzeichnet dass** die Überströmöffnung (154) in mindestens einer von dem Verschlussmittel zunächst fixierten Falte (155) der Trennlage (15) ausgebildet ist,
- wobei die Falte (155) der Trennlage (15) einen ersten und einen zweiten Abschnitt (1552, 1553) der Trennlage (15) umfasst, wobei der erste und der zweite Abschnitt (1552, 1553) entlang einer Faltlinie (1551) aufeinander zu gefaltet sind, und wobei die Überströmöffnung (154) in dem ersten und/oder dem zweiten Abschnitt (1552, 1553) ausgebildet ist.

2. Gassack nach Anspruch 1, **dadurch gekennzeichnet, dass** das Verschlussmittel den ersten Abschnitt (1552) mit dem zweiten Abschnitt (1553) oder mit einem anderen Bereich des Gassacks (1) derart verbindet, dass die Überströmöffnung (154) zunächst verschlossen ist.

3. Gassack nach Anspruch 2, **dadurch gekennzeichnet, dass** das Verschlussmittel eine zerstörbare Verbindung umfasst, die bei Erreichen des Grenzwertes des Innendrucks in der ersten Kammer (13) zumindest teilweise zerstört wird und die Überströmöffnung (154) freigibt.

4. Gassack nach Anspruch 3, **dadurch gekennzeichnet, dass** die zerstörbare Verbindung durch mindestens eine Reißnaht (5) realisiert ist, die bei Erreichen des Grenzwertes des Innendrucks in der ersten Kammer (13) zumindest teilweise aufreißt und die Überströmöffnung (154) freigibt.

5. Gassack nach Anspruch 4, **dadurch gekennzeichnet, dass** die Reißnaht (5) bogenartig zumindest einen Abschnitt eines Randes der Überströmöffnung (154) umläuft.

6. Gassack nach einem der vorhergehenden Ansprüche, **gekennzeichnet durch** eine erste und eine zweite Gassacklage (11, 12), die zumindest die erste Kammer (13) begrenzen.

7. Gassack nach Anspruch 6, **dadurch gekennzeichnet, dass** es sich bei der Trennlage (15) um mindestens eine von der ersten und der zweiten Gassacklage (11, 12) verschiedene Materiallage handelt.

8. Gassack nach Anspruch 6 oder 7, **dadurch gekennzeichnet, dass** sich die Trennlage (15) zumindest teilweise zwischen der ersten und der zweiten Gassacklage (11, 12) erstreckt.

9. Gassack nach einem der Ansprüche 6 bis 8, **dadurch gekennzeichnet, dass** ein erster Teilabschnitt der Trennlage (15) mit der ersten Gassacklage (11) und ein zweiter Teilabschnitt der Trennlage (15) mit der zweiten Gassacklage (12) verbunden ist.

10. Gassack nach Anspruch 6, **dadurch gekennzeichnet, dass** die Trennlage (15) durch einen Abschnitt der zweiten Gassacklage (12) ausgebildet ist.

11. Gassack nach Anspruch 6 oder 10, **gekennzeichnet durch** eine Zusatzlage (16), die zusammen mit der zweiten Gassacklage (12) die zweite Kammer (14) begrenzt.

12. Gassack nach Anspruch 11, **dadurch gekennzeichnet, dass** die Zusatzlage (16) mit der zweiten Gassacklage (12) verbunden ist.

13. Gassack nach Anspruch 11 oder 12, **dadurch gekennzeichnet, dass** die Zusatzlage (16) eine Öffnung (165) aufweist, die mit der Überströmöffnung (154) fluchtet.

14. Gassack nach Anspruch 13, **dadurch gekennzeichnet, dass** die Öffnung (165) in mindestens einer Falte (162) der Zusatzlage (16) ausgebildet ist, die parallel zu der Falte (155) der Trennlage (15) verläuft.

15. Gassack für ein Fahrzeuginsassen-Rückhaltesystem, insbesondere gemäß einem der vorhergehenden Ansprüche, mit
- mindestens einer ersten und einer zweiten Kammer (13, 14);
- mindestens einer Trennlage (15), die die erste Kammer (13) von der zweiten Kammer (14) trennt;
- mindestens einer in der Trennlage (15) ausgebildeten Überströmöffnung (154), über die Gas aus der ersten Kammer (13) in die zweite Kammer (14) übertreten kann; und
- einem Verschlussmittel, das so ausgebildet ist, dass es die Überströmöffnung (154) zunächst verschließt, die Überströmöffnung (154) jedoch zumindest teilweise freigibt, wenn der Innendruck in der ersten Kammer (13) einen vorgebbaren Grenzwert überschreitet und/oder wenn es ein entsprechendes Steuersignal einer Steuereinrichtung erreicht,
- **dadurch gekennzeichnet dass** die Überströmöffnung (154) in mindestens einer von dem Verschlussmittel zunächst fixierten Falte (155) der Trennlage (15) ausgebildet ist,
- wobei die Falte (155) der Trennlage (15) einen ersten und einen zweiten Abschnitt (1552, 1553) der Trennlage (15) umfasst, wobei der erste und der zweite Abschnitt (1552, 1553) entlang einer Faltlinie (1551) aufeinander zu gefaltet sind, und wobei die Überströmöffnung (154) in dem ersten und/oder dem zweiten Abschnitt (1552, 1553) ausgebildet ist.

## Claims

1. Airbag for a vehicle occupant restraint system, with
- at least one first and one second chamber (13, 14) ;
- at least one separating layer (15) which separates the first chamber (13) from the second chamber (14);
- at least one overflow opening (154) which is formed in the separating layer (15) and via which gas can pass out of the first chamber (13) into the second chamber (14);
- a closure means which is designed in such a manner that it closes the overflow opening (154) at the beginning of filling of the first chamber (13), but at least partially opens up the overflow opening (154) when the internal pressure in the first chamber (13) exceeds a predeterminable limit value,
- **characterized in that** the overflow opening (154) is formed in at least one fold (155) of the separating layer (15), said fold (155) initially being held in place by the closure means,
- wherein the fold (155) of the separating layer (15) comprises a first and a second portion (1552, 1553) of the separating layer (15), wherein the first and the second portion (1552, 1553) are folded onto each other along a folding line (1551), and wherein the overflow opening (154) is formed in the first and/or the second portion (1552, 1553).

2. Airbag according to Claim 1, **characterized in that** the closure means connects the first portion (1552) to the second portion (1553) or to another region of the airbag (1) in such a manner that the overflow opening (154) is initially closed.

3. Airbag according to Claim 2, **characterized in that** the closure means comprises a destructible connection which, when the limit value of the internal pressure is reached in the first chamber (13), is at least partially destroyed and opens up the overflow opening (154).

4. Airbag according to Claim 3, **characterized in that** the destructible connection is realized by at least one tearing seam (5) which, when the limit value of the internal pressure is reached in the first chamber (13), at least partially tears open and opens up the overflow opening (154).

5. Airbag according to Claim 4, **characterized in that** the tearing seam (5) encircles at least one portion of an edge of the overflow opening (154) in a curved manner.

6. Airbag according to one of the preceding claims, **characterized by** a first and a second airbag layer (11, 12) which bound at least the first chamber (13) .

7. Airbag according to Claim 6, **characterized in that** the separating layer (15) is at least one material layer which is different from the first and the second airbag layer (11, 12).

8. Airbag according to Claim 6 or 7, **characterized in that** the separating layer (15) at least partially extends between the first and the second airbag layer (11, 12).

9. Airbag according to one of Claims 6 to 8, **characterized in that** a first partial portion of the separating layer (15) is connected to the first airbag layer (11) and a second partial portion of the separating layer (15) is connected to the second airbag layer (12).

10. Airbag according to Claim 6, **characterized in that** the separating layer (15) is formed by a portion of the second airbag layer (12).

11. Airbag according to Claim 6 or 10, **characterized by** an additional layer (16) which, together with the second airbag layer (12), bounds the second chamber (14) .

12. Airbag according to Claim 11, **characterized in that** the additional layer (16) is connected to the second airbag layer (12).

13. Airbag according to Claim 11 or 12, **characterized in that** the additional layer (16) has an opening (165) which is aligned with the overflow opening (154) .

14. Airbag according to Claim 13, **characterized in that** the opening (165) is formed in at least one fold (162) of the additional layer (16), said fold running parallel to the fold (155) of the separating layer (15).

15. Airbag for a vehicle occupant restraint system, in particular according to one of the preceding claims, with
- at least one first and one second chamber (13, 14) ;
- at least one separating layer (15) which separates the first chamber (13) from the second chamber (14);
- at least one overflow opening (154) which is formed in the separating layer (15) and via which gas can pass out of the first chamber (13) into the second chamber (14); and
- a closure means which is designed in such a manner that it initially closes the overflow opening (154), but at least partially opens up the overflow opening (154) when the internal pressure in the first chamber (13) exceeds a predeterminable limit value, and/or when it obtains a corresponding control signal from a control device,
- **characterized in that** the overflow opening (154) is formed in at least one fold (155) of the separating layer (15), said fold (155) initially being held in place by the closure means,
- wherein the fold (155) of the separating layer (15) comprises a first and a second portion (1552, 1553) of the separating layer (15), wherein the first and the second portion (1552, 1553) are folded onto each other along a folding line (1551), and wherein the overflow opening (154) is formed in the first and/or the second portion (1552, 1553).

## Revendications

1. Coussin à gaz pour un système de retenue d'un occupant d'un véhicule, comprenant
- au moins une première et une deuxième chambre (13, 14) ;
- au moins une couche de séparation (15) qui sépare la première chambre (13) de la deuxième chambre (14) ;
- au moins une ouverture de trop-plein (154) réalisée dans la couche de séparation (15), par le biais de laquelle du gaz peut être transféré de la première chambre (13) dans la deuxième chambre (14) ;
- un moyen de fermeture qui est réalisé de manière à fermer l'ouverture de trop-plein (154) lors du début du remplissage de la première chambre (13), mais qui libère toutefois au moins en partie l'ouverture de trop-plein (154) lorsque la pression à l'intérieur de la première chambre (13) dépasse une valeur limite prédéfinissable,
**caractérisé en ce que**
l'ouverture de trop-plein (154) est réalisée dans au moins un pli (155) de la couche de séparation (15) fixé tout d'abord par le moyen de fermeture,
- le pli (155) de la couche de séparation (15) comprenant une première et une deuxième portion (1552, 1553) de la couche de séparation (15), la première et la deuxième portion (1552, 1553) étant repliées l'une sur l'autre le long d'une ligne de pliage (1551) et l'ouverture de trop-plein (154) étant réalisée dans la première et/ou dans la deuxième portion (1552, 1553).

2. Coussin à gaz selon la revendication 1, **caractérisé en ce que** le moyen de fermeture relie la première portion (1552) à la deuxième portion (1553) ou à une autre région du coussin à gaz (1) de telle sorte que l'ouverture de trop-plein (154) soit d'abord fermée.

3. Coussin à gaz selon la revendication 2, **caractérisé en ce que** le moyen de fermeture comprend une liaison destructible qui, une fois atteinte la valeur limite de la pression à l'intérieur de la première chambre (13), est en partie détruite et libère l'ouverture de trop-plein (154).

4. Coussin à gaz selon la revendication 3, **caractérisé en ce que** la liaison destructible réalisée par au moins une ligne de rupture (5) qui, une fois atteinte la valeur limite de la pression à l'intérieur de la première chambre (13), se déchire au moins en partie et libère l'ouverture de trop-plein (154).

5. Coussin à gaz selon la revendication 4, **caractérisé en ce que** la ligne de rupture (5) s'étend en forme d'arc autour d'au moins une portion d'un bord de l'ouverture de trop-plein (154).

6. Coussin à gaz selon l'une quelconque des revendications précédentes, **caractérisé par** une première et une deuxième couche de coussin à gaz (11, 12) qui limitent au moins la première chambre (13) .

7. Coussin à gaz selon la revendication 6, **caractérisé en ce que** la couche de séparation (15) et au moins l'une de la première et de la deuxième couche de coussin à gaz (11, 12) sont des couches de matériau différentes.

8. Coussin à gaz selon la revendication 6 ou 7, **caractérisé en ce que** la couche de séparation (15) s'étend au moins en partie entre la première et la deuxième couche de coussin à gaz (11, 12).

9. Coussin à gaz selon l'une quelconque des revendications 6 à 8, **caractérisé en ce qu'**une première portion partielle de la couche de séparation (15) est connectée à la première couche de coussin à gaz (11) et une deuxième portion partielle de la couche de séparation (15) est connectée à la deuxième couche de coussin à gaz (12) .

10. Coussin à gaz selon la revendication 6, **caractérisé en ce que** la couche de séparation (15) est réalisée par une portion de la deuxième couche de coussin à gaz (12).

11. Coussin à gaz selon la revendication 6 ou 10, **caractérisé par** une couche supplémentaire (16) qui, conjointement avec la deuxième couche de coussin à gaz (12), limite la deuxième chambre (14).

12. Coussin à gaz selon la revendication 11, **caractérisé en ce que** la couche supplémentaire (16) est connectée à la deuxième couche de coussin à gaz (12) .

13. Coussin à gaz selon la revendication 11 ou 12, **caractérisé en ce que** la couche supplémentaire (16) présente une ouverture (165) qui est alignée avec l'ouverture de trop-plein (154).

14. Coussin à gaz selon la revendication 13, **caractérisé en ce que** l'ouverture (165) est réalisée dans au moins un pli (162) de la couche supplémentaire (16) qui s'étend parallèlement au pli (155) de la couche de séparation (15).

15. Coussin à gaz pour un système de retenue d'un occupant d'un véhicule, en particulier selon l'une quelconque des revendications précédentes, comprenant
- au moins une première et une deuxième chambre (13, 14) ;
- au moins une couche de séparation (15) qui sépare la première chambre (13) de la deuxième chambre (14) ;
- au moins une ouverture de trop-plein (154) réalisée dans la couche de séparation (15), par le biais de laquelle du gaz peut être transféré de la première chambre (13) dans la deuxième chambre (14) ; et
- un moyen de fermeture qui est réalisé de manière à d'abord fermer l'ouverture de trop-plein (154), mais qui libère toutefois au moins en partie l'ouverture de trop-plein (154) lorsque la pression à l'intérieur de la première chambre (13) dépasse une valeur limite prédéfinissable et/ou lorsqu'un signal de commande correspondant d'un dispositif de commande l'atteint,
**caractérisé en ce que**
l'ouverture de trop-plein (154) est réalisée dans au moins un pli (155) de la couche de séparation (15) fixé tout d'abord par le moyen de fermeture,
- le pli (155) de la couche de séparation (15) comprenant une première et une deuxième portion (1552, 1553) de la couche de séparation (15), la première et la deuxième portion (1552, 1553) étant repliées l'une sur l'autre le long d'une ligne de pliage (1551) et l'ouverture de trop-plein (154) étant réalisée dans la première et/ou dans la deuxième portion (1552, 1553).
